# EUROPEAN PATENT SPECIFICATION

(11) **EP 2 224 394 B1**
(45) Date of publication and mention of the grant of the patent: **15.08.2012**
(21) Application number: 09154016.1
(22) Date of filing: 27.02.2009
(51) Int. Cl.: G06Q 30/00

(54) **System and method for communicating from an electronic device**
System und Verfahren zur Kommunikation von einer elektronischen Vorrichtung
Système et procédé pour communiquer à partir d'un dispositif électronique

(43) Date of publication of application: 01.09.2010
(73) Proprietor: Research In Motion Limited, Waterloo, ON N2L 3W8 (CA)
(72) Inventor: Bosan, Sorel, Waterloo Ontario N2L 3L3 (CA); Zima, Janice, Waterloo Ontario N2L 3L3 (CA)
(74) Representative: Patel, Binesh

(56) References cited:
- EP-A- 1 003 344
- WO-A-01/20506
- WO-A-2008/059324
- US-A- 5 333 186

## Description

### FIELD

The present disclosure relates generally to communications and more particularly to systems and methods for communicating from an electronic device.

### BACKGROUND

Wireless mobile devices including smart phones, PDAs, appliances, etc. can be configured for voice, data or combined voice and data communications capabilities and are commonly used for personal and business communications. Messages, such as advertisements, may be communicated to a wireless mobile device for presentation to the device's user. A user may agree to receive and have the messages presented in exchange for a benefit. Examples of benefits may include a reduced service fee under a communication service plan associated with the device, an accumulation of credits or points for applying against purchases, and access to use a particular application or service via the wireless mobile device, etc.

European Patent Application EP 1 003 344 A2, "Simultaneous text and audio transmission for sponsored calls", describes a system for allowing an advertiser to pay a portion of the airtime cost of a call originated by a mobile subscriber after that subscriber has listened to a recorded advertisement. A text message associated with an audio advertisement is sent to the user's device. The text message may provide further details regarding the advertisement or it may contain an electronic coupon associated with the advertisement. The text message may be referred to later, by the subscriber, as the text message is stored in the handset.

Document WO 2008/059324, published on 22/05/2008 discloses a portable communication device equipped with keypad filter circuitry, which is operable to eliminate or otherwise minimize calls due to accidental or unintentional key press sequences.

Document WO 01/20506, published on 22/03/2001 discloses a method in which at least one service provider provides services in which the customer is provided with "main services" (which the customer wishes to use, such as banking, e-mail, calls) and "side services", such as advertisements.

### BRIEF DESCRIPTION OF THE DRAWINGS

An embodiment of the invention will now be described by way of example only with reference to the following drawings in which:
- Figure 1: is a block diagram showing an example communication network;
- Figure 2: is a block diagram of a wireless mobile device in accordance with an embodiment;
- Figure 3: is a block diagram of a wireless mobile device showing logical components and data for operations of a message presentation and verification system in accordance with an embodiment thereof;
- Figures 4A and 4B: are respective flow charts of operations of the message presentation and verification system of Figure 3 in accordance with respective embodiments;
- Figures 5A, 5B and 5C: illustrate a representative wireless mobile device presenting messages and cues for invoking communications; and
- Figure 6: is a flow chart of operations for defining and providing combined messages and cues for provisioning the device for communicating.

For convenience, like numerals in the description refer to like structures in the drawings.

### SUMMARY

One concern of advertisers or others offering advertisements, particularly those associated with providing the benefit is effectiveness. An advertisement that is provided to a mobile device but is not presented is not effective. An advertisement that is presented in a manner in which the user avoids experiencing the advertisement is also not effective. A method of communicating on a computing device is provided in which a message is presented and user attention thereto verified before the communication is initiated. In one embodiment the method comprises receiving a first input indicating a request for initiating a communication using the computing device. The message is presented. While presenting the message, a cue is presented to request a second input to proceed with the communication. A second input is received. The communication is initiated only after the presentation of the message is completed and only if the second input is responsive to the cue. In a second embodiment, the message and cue are combined such that presenting the message presents the cue. The message and cue may be combined before transmitting to the communication device. Cue presentation information may be transmitted with the combined message and cue to assist with verification of the second input.

In one aspect there is provided a method of communicating on a computing device as defined in claim 1, wherein a first input is received indicating a request for initiating a communication using the computing device and a message is presented via the communication device as a precursor to initiating the communication. The method comprises: while presenting the message, presenting (406A, 411) a cue (304A, 305) via the computing device to request a second input (312) to proceed with the communication; receiving a second input; and initiating (420) said communication after said presentation of said message is completed only if said second input is responsive to said cue.

The cue may comprise at least one visual element, at least one audio element, at least one vibration or at least one of each of a visual element, an audio element and a vibration..

The method may comprise verifying that the second input is responsive to said cue. The cue may be presented during a cue period and verifying may comprise determining whether the second input was received in association with the cue period. Verifying may comprise determining that the second input is a required input responsive to the cue. The method may comprise providing a verification result, responsive to the verifying, to a recipient for determining a benefit.

The method may comprise receiving and storing a message for presenting before initiating a communication; or receiving and storing a combined message and cue for presenting before initiating a communication, whereby presenting the message also presents the cue as a portion of the message. The method may comprising receiving cue presentation information for the combined message and cue and verifying that the second input is responsive to the cue in accordance with the cue presentation information.

The message may comprise an advertisement.

In another aspect there is provided a computing device comprising a communications sub-system, a processor and a memory comprising instructions and data which when executed configure the processor to perform the method of communicating.

In a further aspect there is provided a computer readable memory comprising instructions, which, when executed on a computing device cause the computing device to perform a method of communicating.

In yet a further aspect, there is provided a system for providing messages according to claim 12. The system comprises: a server configured to communicate advertisements for presentation to users of communication devices, said server configured to verify the presentation; and a plurality of communication devices configured to communicate with the server. Each respective communication device comprises: a processor and a memory coupled thereto, said memory storing instructions and data configuring the processor to: present an advertisement via at least one output of the respective communication device in response to a communication request; while presenting the advertisement, present a cue to request input to proceed to serve the communication request, said cue defined separately from said advertisement or combined with said advertisement; in response to input received during said presenting of the advertisement, determine a verification result to verify the input to proceed and the presenting of the advertisement; serve the communication request after presenting the advertisement and in response to the verification result; and provide the verification result to a recipient for providing a measure of the effectiveness of the advertisement or for determining a benefit.

In a further method aspect, there is described a method for provisioning a computing device for communicating, said computing device presenting a message and a cue to proceed with a communication. The further method comprises: combining a message and cue to define a combined message and cue; defining cue presentation information for the cue with which to verify presentation of the message; transmitting said combined message to said computing device; and transmitting said cue presentation information to said computing device. Corresponding device and computer readable memory aspects are also described.

These and other aspects will be understood from the description below.

### DETAILED DESCRIPTION

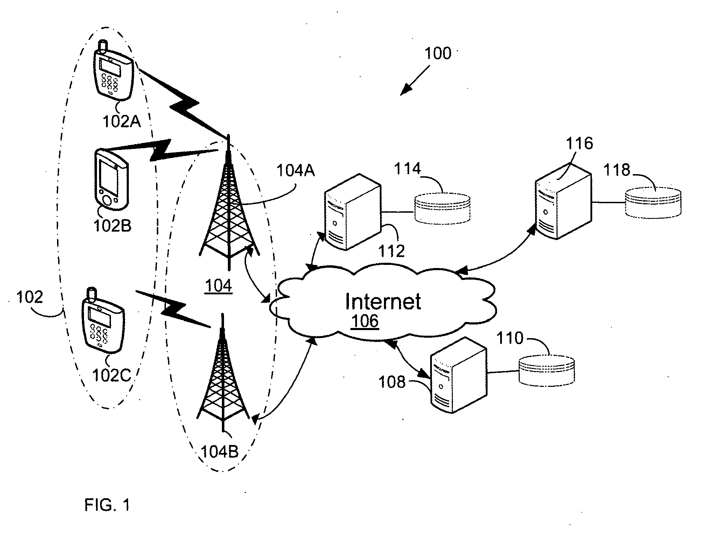

Referring to Figure 1, an example communication network 100 is illustrated in accordance with a present embodiment. Communication network 100 comprises a plurality of mobile wireless communication devices 102A, 102B and 102C, (collectively 102). The devices are coupled for wireless communication via a wireless communication network 104 represented by radio towers 104A and 104B. Network 104 is coupled to interconnection communication facilities 106. Such facilities 106 may be configured as a local area network, wide area network such as the public Internet or combinations thereof. For example, network 104 may be coupled to other networks such as the public switched telephone network (PSTN) via network infrastructure (all not shown).

Via facilities 106 (or other private or public networks (not shown)), various informational sources (e.g. servers) may be coupled for communication. The servers may communicate among each other, with mobile devices 102 or among all. There is illustrated a server 108 providing mobile device administration (hereinafter MDAS 108), a server 112 for wireless network service control (hereinafter carrier server 112) and a server 116 such as an advertisement or other content server for serving messages (hereinafter server 116) in accordance with a present embodiment for subsidizing mobile device usage. Each server 108, 112 and 116 is coupled to a respective data store 110, 114 and 118.

A particular mobile device 102A may comprise one of various computing devices such as a desktop computer, a laptop or other portable computer, a smart phone, a personal digital assistant (PDA), and the like configured for wireless communication via network 104. For simplicity, only some selected network infrastructure (e.g. for wireless carriers and enterprises, including gateways, firewalls, etc.) is shown.

In the present embodiment, the operation of mobile devices 102 may be at least in part under the control of MDAS 108. MDAS 108 provides and enforces usage and other policies on mobile devices 102. Policies may specify which software applications a particular device may use, the services available to those applications and how such applications and services may operate (e.g. through parameters and other configuration of the policies). Example software applications may comprise various data communication or messaging applications such as email, Instant Messaging, SMS, Internet browsing, WAP, push-based messaging and publish/subscribe message services, among others. In some embodiments, MDAS 108 may be hosted and operated in an enterprise context, such as a business or other organization, for group administration of enterprise users.

In the present embodiment, the group of mobile devices 102 receive wireless network services over network 104 in accordance with a group plan from a particular network service provider (e.g. a carrier). The wireless network services are provided, at least in part, under the control of carrier server 112. A group plan may specify pricing and other particulars for voice and data traffic. Voice traffic is typically priced and counted in units of time (e.g. minutes or seconds) whereas data traffic is typically priced and counted in units of data (e.g. bytes). Traffic or usage may be priced on a per mobile device basis or sometimes shared among the group. For example, in an enterprise group plan context, the plan may allow a group of users from the same enterprise such as a business to use X bytes of data traffic or Y seconds of voice traffic (or a combination of voice and data) in total over a particular period such as a month for an applicable fee. In the present embodiment, carrier server 112 monitors the voice and data traffic for each mobile device 102A-102C in accordance with the applicable plan. In an alternative embodiment, the devices 102 may receive such services in accordance with individual user plans with consequent individual monitoring and plan compliance.

As described further herein below, mobile device usage, in particular, traffic on network 104 may be access controlled and subsidized by providing advertisements from server 116 to devices 102 for presentation to the respective device's user. Subsidization may be configured for group or individual user plans. Subsidization may relate to voice usage, data usage, or both. Advertisements (or links thereto) may be stored to the device, for example, and the advertisements presented to the device's user in response to the user's command such as a request to initiate a communication via a device (e.g. 102B). During the presentation of a message, a cue may be provided to the user and further input required to provide access to (i.e. proceed with) the communication. The timing of the input in response to the cue may be used to verify the presentation of the advertisement to the user, that is, to verify that the device is present with the user and that a human user is operating the device while the advertisement is presented.

Verification results may be provided to recipients such a service provider within the communication network 104 or a recipient in an advertisement channel of trade as a measure of advertisement effectiveness. The verification results may be useful to determine subsidization in accordance with the plan or to determine service fees for advertisers, etc. Recipients may comprise an operator of server 116, a carrier service provider, an operator of an MDAS, an advertising agent or advertiser providing the advertisements for communication to mobile devices, the user, etc. In some embodiments, before being provided to at least some of the recipients, verification results may be aggregated or made anonymous to remove information capable of identifying a particular user, as may be desired, for example, for reasons of privacy. Messages also may be provided in accordance with other plans or agreements for other benefits. For example, benefits may comprise an accumulation of credits or points for applying against the price of purchases. Other benefits may comprise access to use a particular application or service via the wireless mobile device. Message presentation verification results may be useful to determine the benefits extended under such plans. Credits may not be accumulated or access may be denied if advertisement presentation cannot be sufficiently verified.

It is appreciated that messages may comprise one or more of audio, text or visual content. Thus presentation may comprise outputting the message to at least one output of the device such as a speaker, display screen or both.

Similarly a cue to invoke further communication may comprise one or more of audio, text or visual content, and may include a vibration, and such a cue may be presented by outputting the cue to at least one output of the device such as a speaker, display screen or both. For example, a graphic cue element may be inserted into a video or other message. Similarly an audio cue may be inserted or otherwise combined with the message. The cue may comprise one or more cue elements. In one embodiment a cue comprises a pair of tones that are presented at, respectively, the start and end of the cue period within which user input is expected to proceed with the communication. In one embodiment, a message received by the device may comprise a cue. In another embodiment, the message may be received without a cue. The device may insert a cue into the message for presenting together or present the cue along with the message.

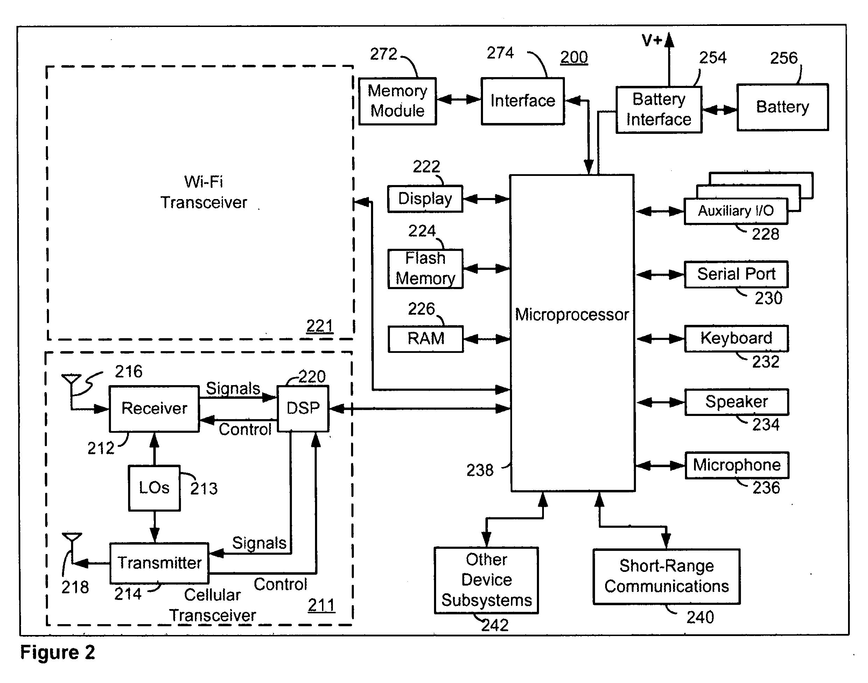

Figure 2 is a detailed block diagram of an embodiment of a handheld wireless communication device 200 that may be configured as one of mobile devices (102A, 102B, 102C) as described. Handheld device 200 may comprise a two-way communication device having at least voice and advanced data communication capabilities, including the capability to communicate with other computer systems. Depending on the functionality provided by handheld device 200, it may be referred to as a data messaging device, a two-way pager, a cellular telephone with data messaging capabilities, a wireless Internet appliance, personal digital assistant (PDA), smart phone, BlackBerry® device or a data communication device (with or without telephony capabilities).

Handheld device 200 may incorporate a cellular transceiver (communication subsystem) 211, which includes a receiver 212, a transmitter 214, and associated components, such as one or more (embedded or internal) antenna elements 216 and 218, local oscillators (LOs) 213, and a processing module such as a digital signal processor (DSP) 220. The particular design of communication subsystem 211 depends on the communication network in which handheld device 200 is intended to operate.

Handheld device 200 may send and receive communication signals over the network 104 after required network registration, authentication or activation procedures have been completed. Signals received by antenna 216 through the network are input to receiver 212, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of handheld device 200 and handheld device 200 may comprise a memory module 272, memory module card or a Removable User Identity Module (R-UIM) or Subscriber Identity Module (SIM/USIM), to be inserted in or connected to an interface 274 to facilitate operation in applicable networks (e.g. 104). Alternatively, memory module 272 may be a non-volatile memory that is programmed with configuration data by a service provider so that mobile station 200 may operate in the network. Since handheld device 200 is a mobile battery-powered device, it also includes a battery interface 264 for receiving one or more rechargeable batteries 266. Such a battery 266 provides electrical power to most if not all electrical circuitry in handheld device 200, and battery interface 264 provides for a mechanical and electrical connection for it. The battery interface 264 is coupled to a regulator (not shown in Figure 2) that provides power V+ to all of the circuitry.

Handheld device 200 may include a Wi-Fi transceiver 221 that may comprise similar components/chipsets to subsystem 211 adapted for one or more Wi-Fi protocols. Though Wi-Fi is shown, WiMAX is one alternative transceiver. In some embodiments, device 200 may be capable of both Wi-Fi and WiMAX communications in accordance with software-defined radio ("cognizant radio") techniques.

Handheld device 200 includes a microprocessor 238 that controls its overall operation. Communication functions, including at least data and voice communications, are performed through communication subsystem 211. Microprocessor 238 also interacts with additional device subsystems such as an LCD or other display device 222, a flash memory 224, a random access memory (RAM) 226, auxiliary input/output (I/O) subsystems or devices 228, a serial port 230, a keyboard 232, at least one speaker 234, a microphone 236, a short-range communications subsystem 240, and any other device subsystems (e.g. removable media) generally designated at 242. Example auxiliary I/O subsystems or devices 228 for verifying the presentation of an advertisement are described further herein below.

Some of the subsystems shown in Figure 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is stored in a persistent store such as flash memory 224, which may alternatively be a read-only memory (ROM) or similar storage element (not shown). Operating system, specific device applications or parts thereof, may be temporarily loaded into a volatile store such as RAM 226.

Microprocessor 238, in addition to its operating system functions, enables execution of software applications on handheld device 200. A predetermined set of applications that control basic device operations, including at least data and voice communication applications, will normally be installed on handheld device 200 during its manufacture. An application that may be loaded onto handheld device 200 may be a personal information manager (PIM) application having the ability to organize and manage data items relating to a user such as, but not limited to, e-mail, calendar events, voice mails, appointments, and task items. Naturally, one or more memory stores are available on handheld device 200 and memory module 272 to facilitate storage of PIM data items and other information.

The PIM application has the ability to send and receive data items via the wireless network. In an embodiment, PIM data items are seamlessly integrated, synchronized, and updated via the wireless network, with the mobile station user's corresponding data items stored and/or associated with a host computer system thereby creating a mirrored host computer on handheld device 200 with respect to such items. This is especially advantageous where the host computer system is the mobile station user's office or enterprise computer system. Additional applications may also be loaded onto handheld device 200 through network, an auxiliary I/O subsystem 228, serial port 230, short-range communications subsystem 640, or any other suitable subsystem 242, and installed by a user in RAM 226 or a non-volatile store (e.g. 224) for execution by microprocessor 238. Such flexibility in application installation increases the functionality of handheld device 200 and may provide enhanced on-device functions, communication-related functions, or both. For example, secure communication applications may enable electronic commerce functions and other such financial transactions to be performed using handheld device 200.

In a data communication mode, a received signal such as a text message, an e-mail message, or web page download, or advertisement will be processed by applicable communication subsystem 211 or 221 and input to microprocessor 238. Microprocessor 238 will further process the signal, in accordance with an associated application, for output to display 222 or alternatively to auxiliary I/O device 228. A user of handheld device 200 may also compose data items in accordance with an associated application, such as e-mail messages, for example, using keyboard 232 in conjunction with display 222 and possibly auxiliary I/O device 228. Keyboard 232 may comprise a complete alphanumeric keyboard and/or telephone-type keypad. These composed items may be transmitted over a communication network through communication subsystem 211 or 221.

For voice communications, the overall operation of handheld device 200 is substantially similar, except that the received signals would be output to speaker 234 and signals for transmission would be generated by microphone 236. One or more dedicated buttons (e.g. from aux. I/O 228) may be associated with a telephone application to invoke or disconnect calling operations. Alternative voice or audio I/O subsystems, such as a voice message recording subsystem, may also be implemented. Although voice or audio signal output is accomplished primarily through speaker 234, display 222 may also be used to provide an indication of the identity of a calling party, duration of a voice call, or other voice call related information, as some examples.

Auxiliary I/O subsystems or devices 228 may comprise one or more biosensor or biometric input devices. Auxiliary I/O subsystems or devices 228 may comprise a camera, an infrared scanner, a heart rate monitor, a finger print reader, or combinations thereof, etc.

Serial port 230 in Figure 2 may be implemented in a personal digital assistant (PDA)-type communication device for which synchronization with a user's desktop computer as a desirable, albeit optional, component. Serial port 230 enables a user to set preferences through an external device or software application and extends the capabilities of handheld device 200 by providing for information or software downloads to handheld device 200 other than through a wireless communication network. The alternate download path may, for example, be used to load an encryption key onto handheld device 200 through a direct and thus reliable and trusted connection to thereby provide secure device communication.

Short-range communications subsystem 240 is an additional optional component that provides for communication between handheld device 200 and different systems or devices, which need not necessarily be similar devices. For example, subsystem 240 may include an IR transceiver and associated circuits and components, or a Bluetooth^{™} communication module to provide for communication with similarly enabled systems and devices.

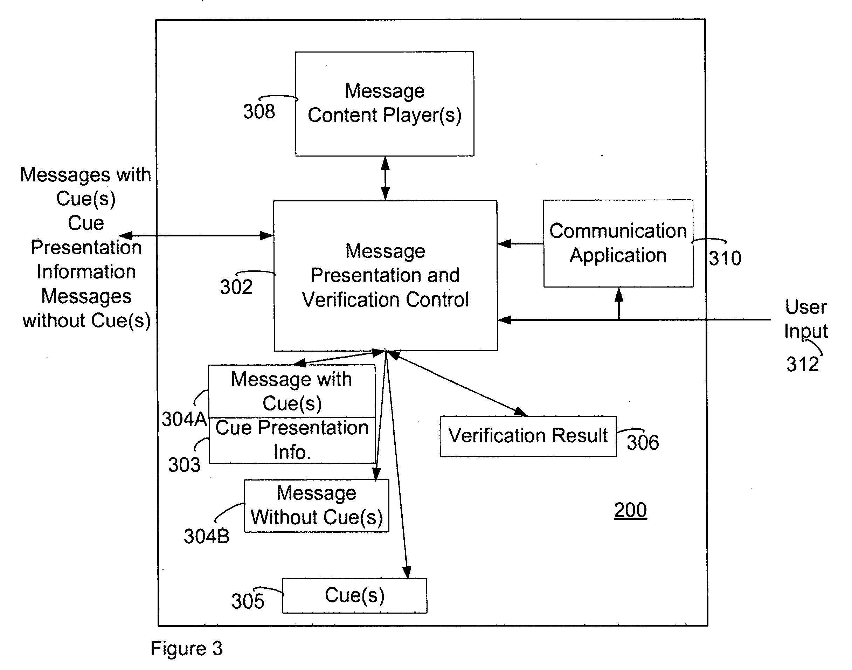

Figure 3 illustrates, in accordance with an embodiment thereof, a block diagram of device 200 showing components (e.g. instructions and data) for operation of a message presentation and verification system. Figure 3 shows a view of a run-time and/or persistent store (such as RAM 226 or flash memory 224) of device 200 comprising broadly, a message presentation and verification control component 302 ("control component"), a message with a cue 304A, a message without a cue 304B, a cue 305, a verification result 306, one or more message content players 308, communication application 310 such as a telephone application and user input data 312. It is understood that other components may be present such as an operating system, communication subsystem, device drivers, applications, etc. (all not shown).

Control component 302 may be configured to receive and store messages (e.g. 304) locally to device 200 for presenting to a user. Alternatively, control component 302 may receive links or other identifying data (not shown) with which to retrieve advertisements from a remote store when commanded to present a message. Messages (304A, 304B) may be received wirelessly such as over network 104, via removable media (not shown), via serial port 230, etc. In one embodiment, messages are received with cues included (304A) (i.e. as combined messages and cues). Cue presentation information 303 may also be included with the combined message and cues to provide an indicator of when (and optionally where or how) the cue is presented during the presentation of the message to assist with verification. For example XML or other data may be provided to define the cue presentation information to control 312.

In another embodiment messages are received without cues (304B). Cues 305 are added (i.e. presented with the messages 304B) by device 200. The cue may be combined by the device, for example, overlaying the cue onto the message and creating a single audio and/or video stream, such that presentation of the message presents the cue. The cue may not be combined per se but simply presented at the same time. In one such embodiment, the message comprises video data and the cue audio data. Though device 200 is shown with both messages with cues (304A) and messages without cues (304B), a device may be configured to operate with message with cues only or messages without cues only (not shown).

Via a graphical user interface (e.g. of the communication application 310 or another application or O/S) or a dedicated button 228, etc. a user provides input to initiate a request to communicate using the device 200. For example, a user presses a phone button to commence a voice call. Communication application 310 and/or control component 302 facilitates the presentation of a message with a cue, via one or more applicable message content players 308 (such as an audio, video or text player) requiring a user to provide input responsive to the cue to proceed with the communication. While presenting the message, control component 302 receives user input data 312 from an applicable input component (e.g. 228, 232). The timely input responsive to the cue may be used to determine a verification result 306 indicating whether a user is operating the device 200 during the presentation and enable further processing of the communication request. If the message does not include a cue, a cue may be presented during the presentation of the message.

In one embodiment, the application 310 may facilitate a user's composition or choice of a number to dial (e.g. from a call list or address book (not shown). Before dialing, the message is played with the cue. In one embodiment the cue comprises the number to be dialed displayed (overlaid) on a portion of the message. The user is required to press a button or provide other input 312 in response to the cue presented during the message.

In one embodiment, the user may only be permitted to dial a number during a portion of the ad. The portion need not be consistent between messages, for example introducing some randomness to the timing. The message may be presented in response to pressing the phone key. The cue informs the user when the number can be dialed, requesting input to proceed. If the user is not paying attention during the cue period, the opportunity is lost. Another message may be presented with a cue period.

The input data 312 may be received periodically while the message is presented to determine whether the user is operating the device 200 throughout the presentation in accordance with verification operations of control component 302. Optionally, in accordance with the verification operations as noted, the user may be cued from time to time during the presentation to provide input data 312. Verification operations may require a predetermined number of successful determinations of the presence of user during the presentation in order to determine an ultimate verification result for the presentation. By way of example, display 222 and/or aux. I/O 228 may comprise a touch screen display device whereby the location of a touch or tap on the screen may be determined. Auxiliary I/O devices may be configured to provide tap interfaces for non-screen portions as well, defining virtual buttons for example. A cue may be provided to the user, from time to time, via the touch screen interface or otherwise, to request the user to touch a particular location on the device 200 to acquire input data 312 in response to the cue. The location on the screen (or device) may be varied, providing a random dynamic location so that the user pays attention and touches appropriately (i.e. at the correct time and location).

If the input data 312 provided indicates the presence of a user (i.e. operation by human user) as determined by the verification operations, a positive verification result indicating user operation may be determined and stored. Otherwise a negative verification result indicating no user operation may be determined and stored. Other verification results may be determined such as a partial result suggesting that the user operated the device for some of the time or an inconclusive result indicating that neither a positive or negative result could be determined. The verification result 306 may be stored in association with data identifying the message. Control component 302 may aggregate the verification result with other such results (not shown) for device 200. Control component 302 provides (e.g. communicates to server 116) the verification result 306 (either alone or in a batch or other aggregation and either with or without data identifying the user and the advertisement(s) verified) for delivery to one or more recipients which result 306 may be used as a measure of effectiveness as described. Similarly, verification result 306 may be used locally by microprocessor 238 in accordance with its configuration to provide access to certain features or functions as may be applicable.

Alternatively, but not shown, presenting the message may be stopped before the end of the message is reached especially when a successful verification determination is made to proceed with a communication and the cue is presented near the end of a message presentation to maximize time for viewing of the message.

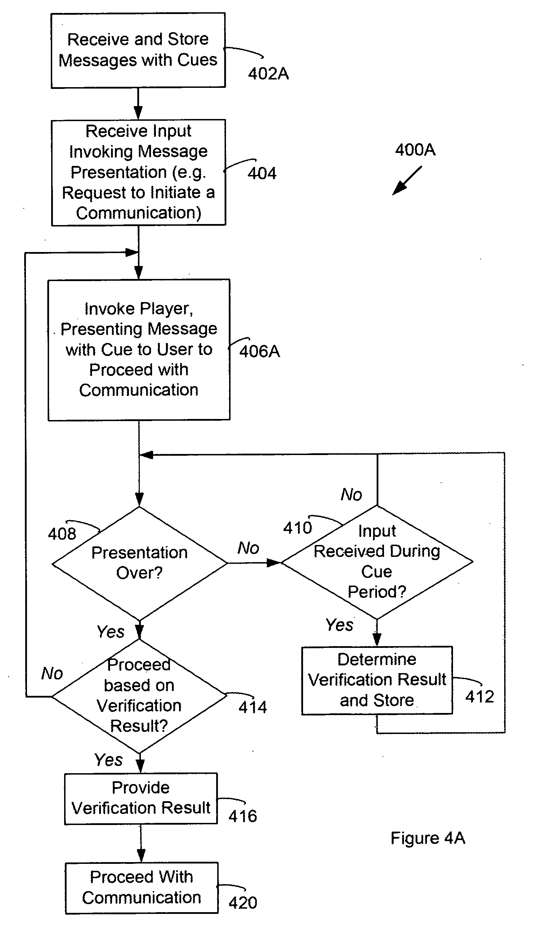

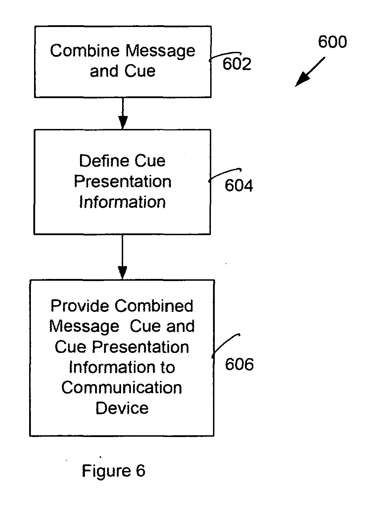

Figure 4A is a flowchart illustrating operations 400A for message presentation and verification in accordance with one embodiment. At step 402A, a plurality of combined messages and cues (e.g. 304A), are received and stored to device 200. Server 116 may provide such messages. To save processing resources at device 200, server 116 or another server may define combined messages and cues 304A as described further with reference to Figure 6. Server 116 may also define and provide any associated cue presentation information 303 providing a indicator of what portion of the combined message and cue is associated with the cue to assist control 302 with verification. The cue presentation information 303 may also comprise an indicator of the required user input (e.g. to instruct acceptance of input from a specific button or keyboard input or specific audio input). If all combined message and cues are standardized (e.g. the cue is always presented 30 seconds into the message for 10 seconds and the required input to verify is a phone button press for every cue), cue presentation information 303 need not be provided and control 302 may be configured to operate similarly for each combined message and cue.

At step 404, input is received to invoke a presentation of a message. The input may comprise a request to initiate a communication via device 200. At step 406A, control component 302 invokes the player 308 to play the message 304 with the cue. It may be desirable that one or the other of player 308 or control component 302 set speaker or display controls so that the presentation is actually audible or visible, etc. In the present embodiment, message 304 comprises a single cue; however, operations 400A may be modified to accommodate multiple cues through the presentation.

During presentation of the message, at steps 408-410, user input 312 may be received by control component 302. A determination may be made whether the required input 312 is received. For example the input may be made during a cue period, during a time following the start of the presentation of the cue to or about the end of the presentation of the cue such as defined by the cue presentation information. Certain tolerances may be provided to allow for user input delays. Spurious or incorrect input may be ignored. A specific predefined user input, (a "required input") such as key press, button press, touch screen input or gestures, audio input etc. may be required. The required input may comprise one or more specific characters or words input using the keys or other key press combination or order. A specific sound or audible may be required. Specific touch screen inputs or gestures on such as screen (taps, wipes, circles, etc.) may be defined. Some auxiliary I/O comprise accelerometers or other position measuring devices capable pf providing movement determinations. Required input may comprise imparting a specific movement to the device 102A. A verification result is determined and stored 412. Operations may loop and continue at step 408 to complete the presentation of the message to maximize viewing.

When the presentation is over, via yes branch at 408 to step 414, a determination is made whether the verification result indicates to proceed with the communication (420). If No, operations 400A may loop to 406A to present a further message (e.g. because the required input was not received or not received during the cue period). Though not shown, a threshold limit may be set to present only a predefined number of messages, to reduce system resources, for example, should no required input responses to a cue be provided.

At 414, if a determination is made that operations should proceed to the communication, at 416, the verification result may be provided, for example to server 116 and or 118, to verify the presentation, and/or determine a benefit. At 420, operations proceed to serve the communication request. Step 416 may be provided after step 420.

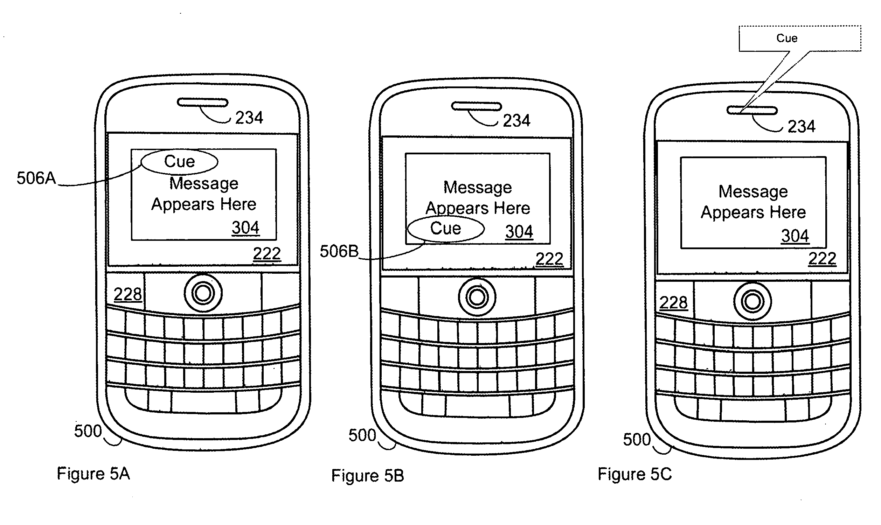

As noted, the instructions may introduce dynamic random acquisition to assist with validity and may direct the user to the message particularly if the instruction cue is integrated with the presentation of the message. Figures 5A, 5B and 5C illustrate a representative wireless communication device 500 in accordance with one embodiment of device 200. In device 500, display 222 is configured to comprise a touch screen display 222 capable of reading a tap location. In Figure 5A, touch screen display 222 presents a cue to touch the screen at a first location 506A to provide a first tap input while presenting message 304. In Figure 5B, touch screen display 222 presents the cue to touch the screen 222 at a second location 506B, different from the first location 506A, to provide a second tap input instance. In the embodiment of Figure 5C speaker 234 provides an audible cue. The cue may instruct the user of the required input such as to press the phone button 228 to dial the number.

Control component 302 may monitor speaker or display controls during the presentation to determine whether the user has turned off these outputs and factor such monitoring into the verification result, provide an applicable user notification, correct the settings or any of these actions (not shown).

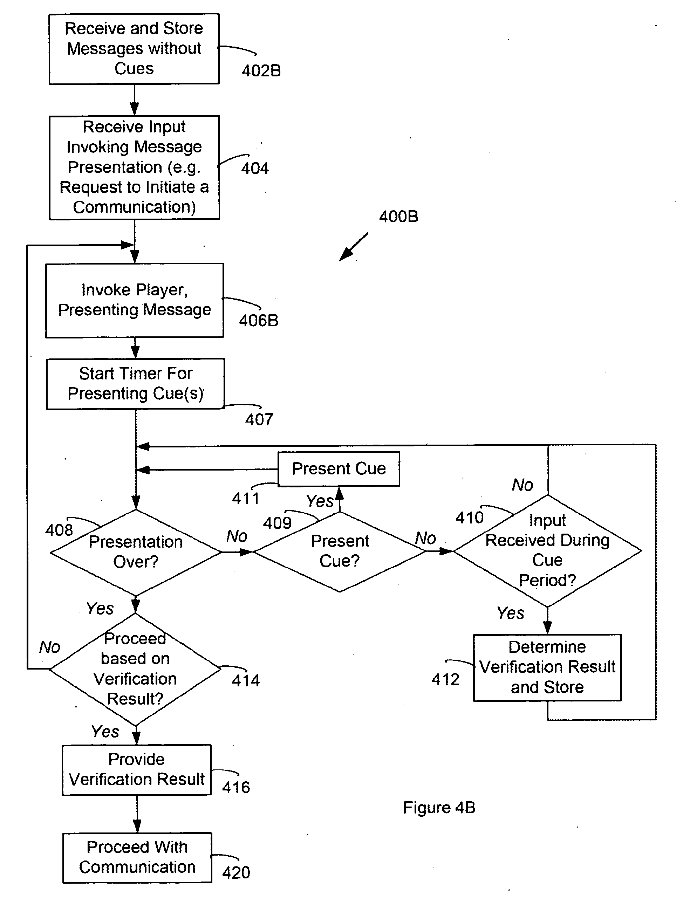

Figure 4B illustrates similar operations 400B to operations 400A. In this embodiment, messages are received without a cue. That is, the cue is added or co-presented under the control of device 200. Operations 400B present a cue along with the presentation of the message. In the present embodiment, at step 402B, messages are received without cues (304B). In the present embodiment, at step 406B, the player is invoked to play the message 304B. At 407 at least one timer is started to trigger the presenting of a cue 305 when presenting a message. At 409, a determination is made whether to present a cue. If yes, operations proceed to present the cue (411) and return to step 408. If no, operations may continue to determine whether an input is received during the cue period to proceed with communications (410). A cue 305 may comprise more than one element such as a start and end cue element so more than one iteration through step 411 may be performed. Similarly, operations 400B may be configured for multiple cues.

Figure 6 is a flow chart of operations for defining and providing combined messages and cues to device 200 for provisioning the device or communicating. At 602 a message and cue are combined. For example a cue is overlaid on a portion of a message. In one embodiment, the cue comprises visual elements (text, video, graphics, etc) to be displayed. In one embodiment the cue comprises audio elements to be sounded. In another, a cue comprises both visual and audio elements. Cue presentation information 303 is defined (604) to provide an indicator of when and/or where or how the cue is presented with the message. The cue presentation information may be useful by control 302 to determine how to verify user input that is responsive to the cue. The user input may be required to occur at a particular time (during the cue period) and the required input may comprise specific input such as certain button or key presses, etc. as described with reference to Figure 4A. Audible or other input may also be accepted. Spurious or incorrect input may be ignored. More than one cue may be defined for each message and appropriate cue presentation information defined as well.

At 606 the combined message and cue as well as the cue presentation information is provided to the communication device 200. The combined message and cue and cue presentation information may be defined in an XML or other stream. More than one message or combined message and cue can be communicated to the device 200 such as in a batch communication.

Although specific embodiments of the present disclosure have been described herein, variations may be made thereto. For example, though determining verification results is discussed on an individual message basis, device 200 may be configured to determine a verification result for a group of advertisements such as those presented consecutively. Messages may be presented to the user in other manners that are not reliant upon direct invocation by the user such as described with reference to a telephone application. For example, messages may be presented when invoking (e.g. launching or otherwise initiating) another particular communication application such as an email, instant message (IM) or short message service (SMS) ("txt") message application. Messages maybe invoked in response to a received communication, for example, when a user initiates a voice call answer or when a user initiates operations to review a new data message. Though described with reference to wireless communication devices, similar operations may be performed for wired communication devices such as appropriately configured desktop computers, telephone handsets, etc.

Though primarily described with reference to messages comprising advertisements, other messages may be contemplated. For example, a message may comprise a notice or other informational content that does not advertise a product or service. The presenting of a message and a cue may establish an access verification mechanism for verifying a user's access to the requested communication. Such an access verification may authorize communications generally or prevent inadvertent communications, for example, an accidental dial, such as may occur when keys are pressed without the user's knowledge. In the case of outgoing communications, it is often desirable to control access to ensure authorized use of the device. Some methods used for access control include passwords, access codes and biometric scans. However, these methods typically enable access at the system level, and are cumbersome to apply to specific communications, such as for different outgoing communications. For example, to establish a different access code for each different outgoing communication would require too many access codes to be remembered and used, making it impractical. In one embodiment, a cue may require the user to input a portion of the communications device's voice number or email address, etc. for verifying to proceed with the communication.

## Claims

1. A method of communicating on a computing device (102A, 102B, 102C, 200), wherein a first input (312) is received (404) at the computing device indicating a request for initiating a communication using the computing device and a message (304A, 304B) is presented (406A, 406B) via the communication device, the method comprising, at the computing device:
while presenting the message, presenting (406A, 411) a cue (304A, 305) overlaid onto the message, the cue comprising instructions, the instructions directing the user of the computing device to the message and specifying a second input required at the computing device as a precursor to initiating said communication;
receiving said required second input during presentation of the message; and
initiating (420) said communication after said presentation of said message is completed only if said specified second input is received.

2. The method of claim 1 wherein the cue (304A, 305) comprises at least one visual element, at least one audio element, at least one vibration or at least one of each of a visual element, an audio element or a vibration.

3. The method of claim 1 or claim 2 further comprising verifying (412) said second input is responsive to said cue.

4. The method of claim 3 wherein the cue (304A, 305) is presented during a cue period and wherein verifying comprises determining whether the second input was received in association with the cue period.

5. The method of claim 3 or claim 4 wherein verifying comprises determining that the second input is a required input responsive to the cue.

6. The method of any one of claims 3, 4 or 5 further comprising providing (416) a verification result (306), responsive to said verifying, to a recipient (116) for determining a benefit.

7. The method of claim 1 comprising: receiving and storing (402A) a message (304B) for presenting before initiating the communication; or receiving and storing (402B) a combined message and cue (304A) for presenting before initiating a communication, whereby presenting (406A) the message also presents the cue as a portion of the message.

8. The method of claim 7 comprising receiving cue presentation information (303) for said combined message and cue (304A) and verifying said second input is responsive to said cue in accordance with the cue presentation information.

9. The method of any one of claims 1 to 8 wherein the message comprises an advertisement.

10. A computing device (102A, 102B, 102C, 200) comprising a communications sub-system (211, 221, 240, 230), a processor (238) and a memory (224) comprising instructions and data which when executed configure the processor to perform a method of communicating (400A, 400B) in accordance with any one of claims 1 to 9.

11. A computer readable memory (224) comprising instructions, which, when executed on a computing device (102A, 102B, 102C, 200), cause the computing device to perform a method of communicating (400A, 400B) in accordance with any one of claims 1 to 9.

12. A system (100) for providing messages comprising:
a server (116) configured to communicate messages for presentation to users of communication devices, said server configured to verify the presentation; and
a plurality of communication devices (102A-102C, 200) configured to communicate with the server, each respective communication device comprising:
a processor (238) and a memory (224) coupled thereto, said memory storing instructions and data configuring the processor to:
present (406A, 406B) at least one message (304A, 304B) via at least one output of the respective communication device in response to a request for initiating a communication;
while presenting the at least one message, present a cue (304A, 305) overlaid onto said message (304A), the cue comprising instructions, the instructions directing the user of the communication device to the message and specifying a second input required at the computing device as a precursor to initiating said communication request;
in response to the required second input (312) received during said presenting of the at least one message, determine (412) a verification result (306) to verify the specified input to proceed and the presenting of the at least one message;
initiate (420) the communication after presenting the at least one message and in response to the verification result; and
provide (416) the verification result to a recipient (116, 118) for providing a measure of the effectiveness of the presenting or for determining a benefit.

13. The system of claim 12 wherein the cue (304A, 305) comprises at least one visual element, at least one audio element, at least one vibration or at least one of each of a visual element, an audio element or a vibration.

14. The system of claim 12 or 13 wherein each respective communication device is further configured to verify (412) the input to proceed is received responsive to said cue.

15. The system of any one of claims 12 to 14 wherein each respective communication device is further configured to: receive and store (402A) a message (304B) for presenting before initiating the communication; or receive and store (402B) a combined message and cue (304A) for presenting before initiating a communication, whereby presenting (406A) the message also presents the cue as a portion of the message.

## Patentansprüche

1. Verfahren zum Kommunizieren auf einer Computervorrichtung (102A, 102B, 102C, 200), wobei eine erste Eingabe (312) an der Computervorrichtung empfangen wird (404), die eine Anforderung zum Initiieren einer Kommunikation unter Verwendung der Computervorrichtung anzeigt, und eine Nachricht (304A, 304B) über die Kommunikationsvorrichtung präsentiert wird (406A, 406B), wobei das Verfahren an der Computervorrichtung aufweist:
während des Präsentierens der Nachricht, Präsentieren (406A, 411) eines Hinweises (304A, 305) überlagert über die Nachricht, wobei der Hinweis Anweisungen aufweist, wobei die Anweisungen den Benutzer der Computervorrichtung zu der Nachricht leiten und eine zweite Eingabe spezifizieren, die an der Computervorrichtung erforderlich ist als ein Vorläufer zum Initiieren der Kommunikation;
Empfangen der erforderlichen zweiten Eingabe während der Präsentation der Nachricht; und
Initiieren (420) der Kommunikation, nachdem die Präsentation der Nachricht beendet ist, nur, wenn die spezifizierte zweite Eingabe empfangen wird.

2. Das Verfahren gemäß Anspruch 1, wobei der Hinweis (304A, 305) zumindest ein visuelles Element, zumindest ein Audioelement, zumindest eine Vibration oder zumindest eines von jedem eines visuellen Elements, eines Audioelements oder einer Vibration aufweist.

3. Das Verfahren gemäß Anspruch 1 oder Anspruch 2, das weiter aufweist ein Verifizieren (412), ob die zweite Eingabe in Reaktion auf den Hinweis ist.

4. Das Verfahren gemäß Anspruch 3, wobei der Hinweis (304A, 305) während einer Hinweiszeitdauer präsentiert wird und wobei das Verifizieren aufweist ein Bestimmen, ob die zweite Eingabe empfangen wurde in Verbindung mit der Hinweiszeitdauer.

5. Das Verfahren gemäß Anspruch 3 oder Anspruch 4, wobei das Verifizieren aufweist ein Bestimmen, dass die zweite Eingabe eine erforderliche Eingabe ist in Reaktion auf den Hinweis.

6. Das Verfahren gemäß einem der Ansprüche 3, 4 oder 5, das weiter aufweist ein Vorsehen (416) eines Verifizierungsergebnisses (306), in Reaktion auf das Verifizieren, für einen Empfänger (116) zum Bestimmen eines Vorteils.

7. Das Verfahren gemäß Anspruch 1, das aufweist: Empfangen und Speichern (402A) einer Nachricht (304B) zum Präsentieren vor einem Initiieren der Kommunikation; oder Empfangen und Speichern (402B) eines kombinierten Nachricht-und-Hinweises (304A) zum Präsentieren vor einem Initiieren einer Kommunikation, wobei ein Präsentieren (406A) der Nachricht auch den Hinweis als einen Teil der Nachricht präsentiert.

8. Das Verfahren gemäß Anspruch 7, das aufweist ein Empfangen von Hinweis-Präsentations-Information (303) für den kombinierten Nachricht-und-Hinweis (304A) und Verifizieren, ob die zweite Eingabe in Reaktion auf den Hinweis in Übereinstimmung mit der Hinweis-Präsentations-Information ist.

9. Das Verfahren gemäß einem der Ansprüche 1 bis 8, wobei die Nachricht eine Werbung aufweist.

10. Eine Computervorrichtung (102A, 102B, 102C, 200), die aufweist ein Kommunikationsteilsystem (211, 221, 240, 230), einen Prozessor (238) und einen Speicher (224), der Anweisungen und Daten aufweist, die bei Ausführung den Prozessor konfigurieren, ein Verfahren zum Kommunizieren (400A, 400B) in Übereinstimmung mit einem der Ansprüche 1 bis 9 durchzuführen.

11. Ein computerlesbarer Speicher (224), der Anweisungen aufweist, die bei Ausführung auf einer Computervorrichtung (102A, 102B, 102C, 200) die Computervorrichtung veranlassen, ein Verfahren zum Kommunizieren (400A, 400B) in Übereinstimmung mit einem der Ansprüche 1 bis 9 durchzuführen.

12. Ein System (100) zum Vorsehen von Nachrichten, das aufweist:
einen Server (116), der konfiguriert ist, Nachrichten zum Präsentieren an Benutzer von Kommunikationsvorrichtungen zu kommunizieren, wobei der Server konfiguriert ist, die Präsentation zu verifizieren; und
eine Vielzahl von Kommunikationsvorrichtungen (102A-102C, 200), die konfiguriert sind, mit dem Server zu kommunizieren, wobei jede jeweilige Kommunikationsvorrichtung aufweist:
einen Prozessor (238) und einen mit diesem gekoppelten Speicher (224), wobei der Speicher Anweisungen und Daten speichert, die den Prozessor konfigurieren zum:
Präsentieren (406A, 406B) zumindest einer Nachricht (304A, 304B) über zumindest eine Ausgabe der jeweiligen Kommunikationsvorrichtung in Reaktion auf eine Anforderung zum Initiieren einer Kommunikation;
während des Präsentierens der zumindest einen Nachricht, Präsentieren eines Hinweises (304A, 305) überlagert über die Nachricht (304A), wobei der Hinweis Anweisungen aufweist, wobei die Anweisungen den Benutzer der Kommunikationsvorrichtung zu der Nachricht leiten und eine zweite Eingabe spezifizieren, die an der Computervorrichtung erforderlich ist als ein Vorläufer zum Initiieren der Kommunikationsanforderung;
in Reaktion auf die erforderliche zweite Eingabe (312), die während der Präsentation der zumindest einen Nachricht empfangen wird, Bestimmen (412) eines Verifizierungsergebnisses (306), um die spezifizierte Eingabe zum Fortfahren und das Präsentieren der zumindest einen Nachricht zu verifizieren;
Initiieren (420) der Kommunikation nach dem Präsentieren der zumindest einen Nachricht und in Reaktion auf das Verifizierungsergebnis; und
Vorsehen (416) des Verifizierungsergebnisses für einen Empfänger (116, 118), um ein Maß der Effektivität des Präsentierens vorzusehen oder einen Vorteil zu bestimmen.

13. Das System gemäß Anspruch 12, wobei der Hinweis (304A, 305) zumindest ein visuelles Element, zumindest ein Audioelement, zumindest eine Vibration oder zumindest eines von jedem eines visuellen Elements, eines Audioelements oder einer Vibration aufweist.

14. Das System gemäß einem der Ansprüche 12 oder 13, wobei jede jeweilige Kommunikationsvorrichtung weiter konfiguriert ist, zu verifizieren (412), ob die Eingabe zum Fortfahren empfangen wird in Reaktion auf den Hinweis.

15. Das System gemäß einem der Ansprüche 12 bis 14, wobei jede jeweilige Kommunikationsvorrichtung weiter konfiguriert ist zum: Empfangen und Speichern (402A) einer Nachricht (304B) zum Präsentieren vor einem Initiieren der Kommunikation; oder Empfangen und Speichern (402B) eines kombinierten Nachricht-und-Hinweises (304A) zum Präsentieren vor einem Initiieren einer Kommunikation, wobei das Präsentieren (406A) der Nachricht auch den Hinweis als Teil der Nachricht präsentiert.

## Revendications

1. Procédé de communication sur un dispositif informatique (102A, 102B, 102C, 200), dans lequel une première entrée (312) est reçue (404) sur le dispositif informatique pour indiquer une demande de lancement d'une communication à l'aide du dispositif informatique et un message (304A, 304B) est présenté (406A, 406B) via le dispositif de communication, le procédé comprenant, sur le dispositif informatique, les étapes consistant à :
tout en présentant le message, présenter (406A, 411) un indice (304A, 305) superposé au message, l'indice comprenant des instructions, les instructions attirant l'attention de l'utilisateur du dispositif informatique sur le message et spécifiant une seconde entrée nécessaire sur le dispositif informatique comme préalable au lancement de ladite communication ;
recevoir ladite seconde entrée pendant la présentation du message ; et
lancer (420) ladite communication après achèvement de la présentation dudit message, uniquement si ladite seconde entrée spécifiée a été reçue.

2. Procédé selon la revendication 1, dans lequel l'indice (304A, 305) comprend au moins un élément visuel, au moins un élément audio, au moins une vibration ou au moins un élément de chacun des éléments visuel, audio et de vibration.

3. Procédé selon la revendication 1 ou la revendication 2, comprenant en outre l'étape consistant à vérifier (412) que ladite seconde entrée est une réponse audit indice.

4. Procédé selon la revendication 3, dans lequel l'indice (304A, 305) est présenté pendant une période d'indice et dans lequel l'étape de vérification comprend l'étape consistant à déterminer si la seconde entrée a été reçue en association avec la période d'indice.

5. Procédé selon la revendication 3 ou la revendication 4, dans lequel l'étape de vérification comprend l'étape consistant à déterminer que la seconde entrée est une entrée exigée en réponse à l'indice.

6. Procédé selon l'une quelconque des revendications 3, 4 et 5, comprenant en outre l'étape consistant à fournir (416), à la suite de ladite étape de vérification, un résultat de vérification (306) à un destinataire (116) afin de déterminer un avantage.

7. Procédé selon la revendication 1, comprenant les étapes consistant à : recevoir et stocker (402A) un message (304B) à présenter avant le lancement de la communication ; ou recevoir et stocker (402B) un message combiné à un indice (304A) à présenter avant le lancement de la communication, la présentation (406A) du message présentant également l'indice comme une partie du message.

8. Procédé selon la revendication 7, comprenant les étapes consistant à recevoir des informations de présentation d'indice (303) pour ledit message combiné avec indice (304A) et à vérifier que ladite seconde entrée se fait en réponse audit indice, en fonction des informations de présentation d'indice.

9. Procédé selon l'une quelconque des revendications 1 à 8, dans lequel le message comprend une publicité.

10. Dispositif informatique (102A, 102B, 102C, 200) comprenant un sous-système de communication (211, 221, 240, 230), un processeur (238) et une mémoire (224) stockant des instructions et des données qui, lorsqu'elles sont exécutées, configurent le processeur pour exécuter un procédé de communication (400A, 400B) selon l'une quelconque des revendications 1 à 9.

11. Mémoire lisible par ordinateur (224) stockant des instructions qui, lorsqu'elles sont exécutées sur un dispositif informatique (102A, 102B, 102C, 200), amènent le dispositif informatique à exécuter un procédé de communication (400A, 400B) selon l'une quelconque des revendications 1 à 9.

12. Système (100) destiné à fournir des messages, comprenant :
un serveur (116) configuré pour communiquer des messages à présenter à des utilisateurs de dispositifs de communication, le serveur étant configuré pour vérifier la présentation ; et
une pluralité de dispositifs de communication (102A à 102C, 200) configurés pour communiquer avec le serveur, chacun des dispositifs de communication respectifs comprenant :
un processeur (238) et une mémoire (224) qui lui est couplée, ladite mémoire stockant des instructions et des données qui configurent le processeur afin de :
présenter (406A, 406B) au moins un message (304A, 304B) via au moins une sortie du dispositif de communication respectif en réponse à une demande de lancement d'une communication ;
tout en présentant ledit au moins un message, présenter un indice (304A, 305) superposé audit message (304A), l'indice comprenant des instructions, les instructions attirant l'attention de l'utilisateur du dispositif de communication sur le message et spécifiant une seconde entrée nécessaire sur le dispositif informatique comme préalable au lancement de ladite demande de communication ;
en réponse à la seconde entrée (312) nécessaire, reçue pendant ladite présentation dudit au moins un message, déterminer (412) un résultat de vérification (306) afin de vérifier l'entrée spécifiée pour poursuivre et la présentation dudit au moins un message ;
lancer (420) ladite communication après la présentation dudit au moins un message et en réponse au résultat de vérification ; et
fournir (416) le résultat de vérification à un destinataire (116, 118) afin de donner une mesure de l'efficacité de la présentation ou afin de déterminer un avantage.

13. Système selon la revendication 12, dans lequel l'indice (304A, 305) comprend au moins un élément visuel, au moins un élément audio, au moins une vibration ou au moins un élément de chacun des éléments visuel, audio et de vibration.

14. Système selon la revendication 12 ou 13, dans lequel chacun des dispositifs de communication respectifs est en outre configuré pour vérifier (412), avant de poursuivre, que l'entrée a été reçue en réponse audit indice.

15. Système selon l'une quelconque des revendications 12 à 14, dans lequel chacun des dispositifs de communication respectifs est en outre configuré pour recevoir et stocker (402A) un message (304B) à présenter avant le lancement de la communication ; ou recevoir et stocker (402B) un message combiné à un indice (304A) à présenter avant le lancement de la communication, la présentation (406A) du message présentant également l'indice comme une partie du message.
